# EUROPÄISCHE PATENTSCHRIFT

(11) **EP 2 277 177 B1**
(45) Veröffentlichungstag und Bekanntmachung des Hinweises auf die Patenterteilung: **02.08.2017**
(21) Anmeldenummer: 09735811.3
(22) Anmeldetag: 06.04.2009
(51) Int. Cl.: H01C 7/02, H01C 7/04, H01C 17/08, H01C 17/12, G01L 1/18, G01L 1/22

(54) **SCHICHTWIDERSTAND MIT KONSTANTEM TEMPERATURKOEFFIZIENTEN SOWIE HERSTELLUNG EINES SOLCHEN SCHICHTWIDERSTANDS**
FILM RESISTOR WITH A CONSTANT TEMPERATURE COEFFICIENT AND PRODUCTION OF A FILM RESISTOR OF THIS TYPE
RÉSISTANCE À COUCHE, À COEFFICIENT DE TEMPÉRATURE CONSTANT ET FABRICATION D'UNE TELLE RÉSISTANCE À COUCHE

(30) Priorität: 24.04.2008 DE 102008022607; 05.03.2009 DE 102009011353
(43) Veröffentlichungstag der Anmeldung: 26.01.2011
(73) Patentinhaber: Hochschule für Technik und Wirtschaft des Saarlandes, 66117 Saarbrücken (DE); Siegert TFT GmbH, 07629 Hermsdorf (DE)
(72) Erfinder: SCHULTES, Günther, 66123 Saarbrücken (DE); GÖTTEL, Dirk, 66798 Wallerfangen (DE); KOPPERT, Ralf, 38226 Salzgitter (DE); FREITAG-WEBER, Olilvia, 66773 Schawlbach (DE); WERNER, Ulf, 66386 St. Ingbert (DE); BRODE, Wolfgang, 07629 Hermsdorf (DE)
(74) Vertreter: Crazzolara, Helmut
(86) Internationale Anmeldenummer: PCT/EP2009/002530
(87) Internationale Veröffentlichungsnummer: WO 2009/129930

(56) Entgegenhaltungen:
- EP-A- 0 575 003
- DE-A1- 3 522 427
- DE-A1- 19 954 164
- DE-A1-102006 019 942
- JP-A- 10 270 203
- JP-A- 2002 008 904
- JP-A- 2006 024 863
- US-A- 5 367 285
- SCHULTES, GÜNTER, FREITAG-WEBER, OLIVIA: "Piezoresistive Dünnfilm-Sensorschichten für erhöhte Temperaturen" FORSCHUNGSBERICHT HOCHSCHULE FÜR TECHNIK UND WIRTSCHAFT DES SAARLANDES, 2003, XP002540924

## Beschreibung

### Technisches Gebiet

Die Erfindung betrifft einen Schichtwiderstand mit einer Schicht aus kohlenstoffhaltigem Material, insbesondere aus diamantartigem Kohlenstoff, graphitähnlichem Kohlenstoff und dergleichen, in die leitfähiges Material eingebracht ist.

### Stand der Technik

Präzisionswiderstände werden in vielen Einsatzgebieten der Elektrotechnik verwendet und sind aus dem Stand der Technik wohl bekannt. Üblicherweise werden Präzisionswiderstände mit Hilfe von Metallschichten definierter Länge und Querschnittsfläche realisiert. Heute werden meist Metallschichten aus Nickel-Chrom-Verbindungen oder Konstantan eingesetzt. Ein Nachteil eines mit einer Metallschicht realisierten Präzisionswiderstandes besteht in seiner erheblichen nichtlinearen, insbesondere parabolischen Temperaturabhängigkeit, die im Allgemeinen alle Legierungen und Metalle aufweisen.

Insbesondere bei der Verwendung von Nickel-Chrom-Verbindungen für Präzisionswiderstände zeigt der elektrische Widerstand zudem eine Abhängigkeit von der gewählten Abkühlungsgeschwindigkeit während des Herstellungsprozesses, so dass in begrenzten Temperaturbereichen eine unterschiedliche Temperaturabhängigkeit des elektrischen Widerstandes abhängig von den Herstellungsbedingungen erzielt werden kann. Durch Anwenden definierter Temperschritte und Abkühlungszeiten nach den Temperaturbehandlungen können jedoch bei derartigen Metallschichten die Temperaturkoeffizienten des Widerstands in einem begrenzten Temperaturbereich auf nahezu Null eingestellt werden. Während derartige Metallschichtwiderstände in dem begrenzten Temperaturbereich als annähernd temperaturkonstant angenommen werden können, sind diese als Präzisionswiderstände über einen großen Temperaturbereich, insbesondere bei Temperaturen unter 200 K oder bei Temperaturen über 400 K jedoch nicht brauchbar.

Es ist weiterhin bekannt, dass kohlenstoffhaltige Schichten als Widerstandsmaterial eingesetzt werden können. Diese Materialien weisen einen Temperaturkoeffizienten von ± 100 ppm/K in einem begrenzten Temperaturbereich und in der Regel einen hohen spezifischen Widerstand von mehr als 1000 µΩ·cm auf.

Beschichtungen auf Basis amorphen Kohlenstoffs a-C bzw. Kohlenwasserstoffs a-C:H sind aus dem Stand der Technik hinreichend bekannt und dienen in erster Linie zur Verringerung des Verschleißes. So zeigen die DE 10 2006 029 415 und DE 10 2006 027 502 entsprechende tribologische Funktionsschichten, mit deren Hilfe die Reibung reduziert und dadurch gleichzeitig die Verschleißbeständigkeit von Maschinenkomponenten erhöht wird. Aus JP 2002 008904 A ist ein Schichtwiderstand mit einem kohlenstoffhaltigen Material bekannt, in das Partikeln aus leitfähigem Material eingebracht sind, wobei die Partikeln von Kohlenstoff umgeben sind und in das kohlenstoffhaltige Material eingebettet sind. Es ist auch bekannt, dass die elektrischen Eigenschaften von kohlenstoffhaltigen Schichten, insbesondere a-C:H-Schichten, durch den Einbau von Metallen stark beeinflusst werden können. So wird, um den ohmschen Widerstand von kohlenstoffhaltigen Schichten einzustellen, in der Druckschrift DE 109 54 164 A1 vorgeschlagen, die kohlenstoffhaltige Schicht mit einem Metallmaterial zu dotieren, um den Widerstand entsprechend zu erniedrigen. Diese Dünnschichten können in einem kombinierten PVD/CVD-Prozess durch das Sputtern von einem Targetmaterial mit zusätzlich eingeleitetem kohlenstoffhaltigen Reaktivgas hergestellt werden. Dabei bilden sich Metallcluster in einer nicht näher spezifizierbaren Kohlenstoffmatrix bzw. Kohlenwasserstoffmatrix.

Auch in der Druckschrift EP 05 75 003 A2 ist eine kohlenstoffhaltige Schicht, die Metall enthält, offenbart, wobei die Schicht so ausgebildet ist, dass zwischen dem Metall und dem Kohlenstoff keine Carbidbildung erfolgt.

Es wurde jedoch beobachtet, dass bei metallhaltigen amorphen Kohlenwasserstoffen, bei denen das Dotiermaterial z.B. eines der Metalle Ag, Au, Cu, Pt oder Pd enthält, die Temperaturkoeffizienten über einen weiten Temperaturbereich instabil sind, d.h. sich permanent ändern, so dass sich ein solches Material als Widerstandsmaterial mit definiertem bzw. konstantem Temperaturkoeffizienten nicht eignet.

Aufgrund der Temperaturabhängigkeit ihres Widerstandes werden Widerstandsschichten mit einem kohlenstoffhaltigen Material beispielsweise als Temperatursensoren in beanspruchten Bereichen von Maschinen eingesetzt. Dies ist beispielsweise aus der Druckschrift DE 102 53 178 A1 bekannt, wobei eine Schicht aus diamantartigem Kohlenstoff als Temperatursensor eingesetzt wird. Nachteilig ist dabei jedoch die oben erwähnte nichtlineare Temperaturabhängigkeit des elektrischen Widerstandes.

Ebenfalls aus dem Stand der Technik bekannt ist das piezoresistive Verhalten von Kohlenstoff in Kohlenwasserstoffschichten, auf Grundlage dessen sie als Piezoaktoren oder Piezosensoren Verwendung finden. So zeigt die
DE 10 2006 019 942 Systeme mit amorphen Kohlenstoffschichten, die piezoresistive Eigenschaften aufweisen, die zur Bestimmung von Kräften verwendet werden können.

Aufgrund ihrer piezoresistiven Eigenschaften haben die Kohlenstoff enthaltenden Schichten ein hohes Potenzial für Sensoranwendungen, wie z.B. für Kraft- oder Druckaufnehmer. Während herkömmliche Dehnungsmessstreifen, die auf CrNi-Widerstandsstrukturen basieren, eine Dehnungsempfindlichkeit im Bereich eines k-Faktors von ca. 2 aufweisen, die durch eine Geometrieänderung des Dehnungsmessstreifens verursacht wird, weisen kohlenstoffhaltige Schichten, z.B. amorphe Kohlenstoffschichten, k-Faktoren im Bereich von 10 bis 20 auf. Jedoch zeigen kohlenstoffhaltige Schichten neben ihrem piezoresistiven Verhalten auch die oben beschriebene starke Temperaturabhängigkeit ihres elektrischen Widerstandes. Eine solche Temperaturabhängigkeit ist bei einer Verwendung der piezoresistiven Eigenschaft einer kohlenstoffhaltigen Schicht, z.B. als Kraftsensor, nachteilig, da Änderungen der Umgebungstemperatur zu kraftunabhängigen Widerstandsänderungen und damit zu einer Verfälschung der Messergebnisse führen können.

Es ist Aufgabe der vorliegenden Erfindung, einen Schichtwiderstand zur Verfügung zu stellen, der eine lineare Temperaturempfindlichkeit seines elektrischen Widerstandes über einen großen Temperaturbereich aufweist. Es ist weiterhin Aufgabe der vorliegenden Erfindung, ein Verfahren zum Herstellen eines solchen Schichtwiderstands zur Verfügung zu stellen.

### Offenbarung der Erfindung

Diese Aufgaben werden durch den Schichtwiderstand nach Anspruch 1, das Verfahren zum Auswählen eines Clustermaterials zum Einbringen in das kohlenstoffhaltige Material und das Verfahren zum Herstellen eines Schichtwiderstandes gemäß den nebengeordneten Ansprüchen gelöst.

Weitere vorteilhafte Ausgestaltungen sind in den abhängigen Ansprüchen angegeben.

Gemäß einem ersten Aspekt ist ein Schichtwiderstand mit einem kohlenstoffhaltigen Material vorgesehen, in das Cluster aus leitfähigem Clustermaterial eingebracht ist. Das leitfähige Clustermaterial weist einen positiven Temperaturkoeffizienten auf, wobei die Cluster von einer Graphithülle umgeben sind, die in das kohlenstoffhaltige Material eingebettet sind. Das Clustermaterial liegt in einer thermodynamisch stabilen Phase, insbesondere bei Nickel in einer kubischen Phase, vor.

Eine Idee der vorliegenden Erfindung besteht darin, einen Schichtwiderstand zur Verfügung zu stellen, der über einen großen Temperaturbereich einen konstanten Temperaturkoeffizienten des Widerstands aufweist. Insbesondere soll der Temperaturkoeffizient des Widerstands sehr genau einstellbar sein. Dazu ist vorgesehen, das Material für den Schichtwiderstand eine kohlenstoffhaltige Schicht, wie z.B. amorpher Kohlenstoff, diamantartiger Kohlenstoff, graphitähnlicher Kohlenstoff oder amorpher Kohlenwasserstoff mit Clustern eines leitfähigen Materials zu versehen, wobei die Cluster von Hüllen aus einer oder mehreren Lagen Graphen (Graphenhüllen) umgeben sind, die die Cluster des leitfähigen Materials voneinander trennen. Es ist vorgesehen, dass das Clustermaterial in einer Phase vorliegt, die insbesondere temperaturstabil ist, d.h. sich bei hohen Temperaturen, z.B. über 300°C keine Umwandlungen und dadurch Änderungen der Eigenschaften ergeben. Dies wird gewährleistet, indem das Material der Cluster in einer thermodynamisch stabilen Phase in das kohlenstoffhaltige Material eingebettet wird.

Weiterhin kann der obige Schichtwiderstand als Präzisionswiderstand auch bei sehr niedrigen Temperaturen eingesetzt werden.

Der Schichtwiderstand mit den in das kohlenstoffhaltige Material eingebetteten Clustern, die von einer Graphithülle umgeben sind, ermöglicht das Herstellen eines Schichtwiderstandes mit besonders linearer Temperaturabhängigkeit über einen hohen Temperaturbereich - zwischen 50 bis 500K.

Dies stellt einen erheblichen Vorteil gegenüber Präzisionswiderständen mit Legierungen und Metallen dar, da diese einen nicht-konstanten und nicht-linearen Temperaturkoeffizienten des Widerstandes aufweisen.

Weiterhin kann der Anteil des Clustermaterials unterhalb der Perkolationsschwelle für das Clustermaterial gewählt sein, dass keine vollständige Perkolation der Cluster in dem kohlenstoffhaltigen Material auftritt.

Weiterhin kann das kohlenstoffhaltige Material eine Matrix mit amorphem Kohlenstoff oder amorphem Kohlenwasserstoff aufweisen.

Gemäß einer Ausführungsform kann das leitfähige Clustermaterial Metall oder eine Metalllegierung, insbesondere Nickel oder eine Nickellegierung, enthalten.

Insbesondere kann der Anteil des Clustermaterials in der kohlenstoffhaltigen Schicht so eingestellt sein, dass der Temperaturkoeffizient des Schichtwiderstandes 0 ist.

Gemäß einem weiteren Aspekt ist ein Verfahren zum Auswählen eines leitfähigen Clustermaterials für Cluster bei der Herstellung eines Schichtwiderstands nach Anspruch 1 durch Ausbilden der Cluster durch Abscheidung in einem PVD-Prozess in einer reaktiven Atmosphäre mit einem kohlenstoffhaltigen Gas, wobei das Clustermaterial unter Vorgabe eines gewünschten Temperaturkoeffizienten des Widerstandes, insbesondere eines gewünschten Temperaturkoeffizienten des Widerstandes von gleich oder größer Null, so ausgewählt wird, dass bei einem Anteil des Clustermaterials, bei dem der gewünschte Temperaturkoeffizient erreicht wird, unterhalb der Perkolationsschwelle liegt.

Weiterhin kann als Clustermaterial ein Material ausgewählt werden, das chemisch inert gegen Luft, Wasser oder Öl ist.

Gemäß einer Ausführungsform kann als Clustermaterial ein Material ausgewählt werden, bei dem keine Diffusionsbewegung der Cluster in dem kohlenstoffhaltigen Material auftritt.

Gemäß einem weiteren Aspekt ist ein Verfahren zur Herstellung eines Schichtwiderstands vorgesehen. Das Verfahren umfasst die folgenden Schritte:
- Durchführen eines PVD-Prozesses mit einem Sputtermaterial auf ein Trägersubstrat unter einer reaktiven Atmosphäre eines kohlenstoffhaltigen Gases, so dass das kohlenstoffhaltige Gas dissoziiert wird und eine kohlenstoffhaltige Schicht auf dem Trägersubstrat abgeschieden wird, in der Cluster des Sputtermaterials eingebettet sind, wobei die kohlensstoffhaltige Schicht während des Durchführens des PVD-Prozesses auf eine vorbestimmte Temperatur erhitzt wird, bei der sich das Sputtermaterial oder eine Verbindung des Sputtermaterials in einer stabilen Phase ausbildet.

Das obige Verfahren ermöglicht die Herstellung eines solchen kohlenstoffhaltigen Materials mit eingebetteten Clustern aus dem Clustermaterial in besonders effizienter Weise, da während der Abscheidung des kohlenstoffhaltigen Materials mit den eingebetteten Clustern das Clustermaterial in eine thermodynamisch stabile Phase gebracht wird. Dies wird durch einen zusätzlichen Energieeintrag auf das Trägersubstrat, auf dem der Schichtwiderstand aufgebracht wird, erreicht. Auf diese Weise kann der Schichtwiderstand in einem einzigen Arbeitsschritt hergestellt werden.

Weiterhin kann vorgesehen sein, dass das Trägersubstrat auf eine Temperatur zwischen 150°C und 400°C geheizt wird. Weiterhin kann das kohlenstoffhaltige Gas Ethan oder Ethylen aufweisen.

Weiterhin kann vorgesehen sein, dass die Konzentration des kohlenstoffhaltigen Gases den Anteil des Sputtermaterials in der kohlenstoffhaltigen Schicht bestimmt, wobei die Konzentration des kohlenstoffhaltigen Gases so eingestellt wird, dass die Cluster des Sputtermaterials in der kohlenstoffhaltigen Schicht von einander durch Graphenschichten getrennt sind. Insbesondere kann der Anteil des Sputtermaterials so gewählt werden, dass sich ein vorgegebener Temperaturkoeffizient des Widerstands für den Schichtwiderstand einstellt.

Gemäß einem weiteren Aspekt ist eine Verwendung des obigen Schichtwiderstands als Sensorschicht vorgesehen, wobei ein dehnungsempfindlicher Bereich durch den Schichtwiderstand ausgebildet ist.

Gemäß einem weiteren Aspekt ist ein Schichtwiderstand vorgesehen, der durch das obige Verfahren herstellbar ist.

### Kurzbeschreibung der Zeichnungen

Bevorzugte Ausführungsformen werden nachfolgend anhand der beigefügten Zeichnungen näher erläutert. Es zeigen:
Fig. 1 einen Querschnitt durch einen Schichtwiderstand aus kohlenstoffhaltigem Material mit eingebetteten Clustern aus leitfähigem Material;
Fig. 2 eine schematische Darstellung der von Graphenhüllen umgebenen Cluster und ihrer Wechselwirkung;
Fig. 3 eine Darstellung eines Verlauf des spezifischen Widerstands über der Temperatur;
Fig. 4 eine weitere Darstellung eines Verlauf des spezifischen Widerstands über der Temperatur in einem weiteren Temperaturbereich;
Fig. 5 eine Vorrichtung zur Herstellung eines Schichtwiderstands;
Fig. 6 ein Diagramm zur Darstellung einer Abhängigkeit zwischen der Ethylen bzw. Ethan -Konzentration im Inertgas zum Anteil von Clustermaterial im Schichtwiderstand;
Fig. 7 ein Diagramm zur Darstellung der Abhängigkeit des k-Faktors von der Schichtdicke bei verschiedenen Trägersubstrattemperaturen während der Herstellung des Schichtwiderstands;
Fig. 8 eine Darstellung einer Beziehung zwischen der Schmelztemperatur für die Metalle Au, Pt, Fe und W und der Clustergröße bei dem Herstellungsverfahren gemäß Fig. 5.

### Beschreibung von Ausführungsformen

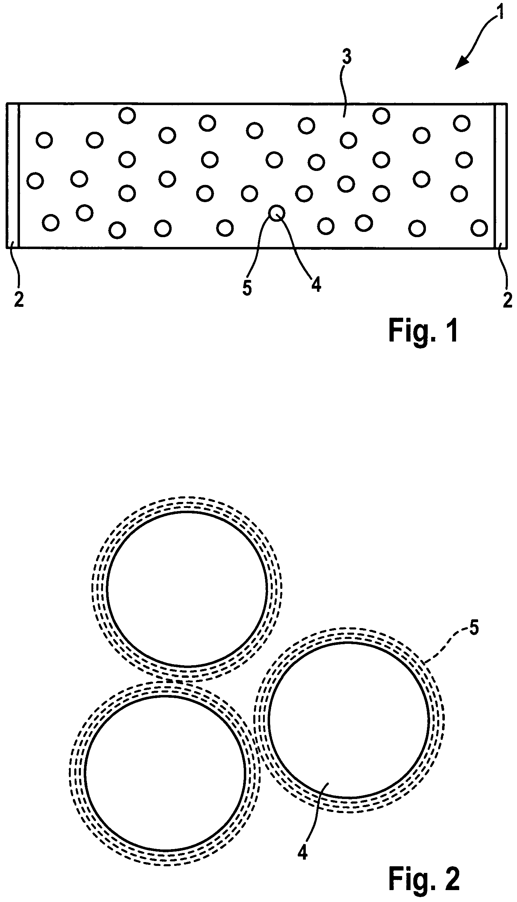

In Fig. 1 ist eine Schnittansicht durch einen Schichtwiderstand 1 dargestellt, der zwischen zwei Elektroden 2 angeordnet ist. Der Schichtwiderstand 1 dient dazu einen definierten elektrischen Widerstand zwischen den beiden Elektroden 2 bereitzustellen.

Der Schichtwiderstand 1 umfasst eine Kohlenstoff enthaltende Schicht 3, die vorzugsweise diamantartigem Kohlenstoff, graphitartigem Kohlenstoff, amorphem Kohlenstoff a-C oder amorphem Kohlenwasserstoff a-C:H entspricht. Das kohlenstoffhaltige Material der Kohlenstoff enthaltenden Schicht 3 bildet eine sogenannte Kohlenstoff-Matrix, in die Cluster 4 aus einem leitfähigen Clustermaterial X eingebettet sind. Die entstehenden Schichten werden kurz als X:a-C bzw. X:a-C:H bezeichnet. Die Cluster 4 stellen Inseln des Clustermaterials bzw. eines Carbids des Clustermaterials in der Kohlenstoff enthaltenden Schicht 3 dar und sind vorzugsweise in dem Schichtmaterial der Kohlenstoff enthaltenden Schicht 3 gleichverteilt.

Die Cluster 4 liegen dabei in vorzugsweise sphärischer Form vor und sind von einer Kohlenstoffmatrix der Kohlenstoff enthaltende Schicht 3 umgeben. Auch andere Formen der Cluster 4 wurden bei Variation von Prozessparametern bei der Herstellung beobachtet, z.B. elliptische und längliche Cluster. Das Clustermaterial ist in die kohlenstoffhaltige Schicht 3 eingebettet. Das leitfähige Material der Cluster 4 enthält vorzugsweise ein Metall oder eine Metalllegierung, wobei Nickel, Nickellegierungen, Nickelverbindungen, Kobalt, Kobaltlegierungen, Kobaltverbindungen, Eisen, Eisenlegierungen oder Eisenlegierungen als geeignet erscheinen und insbesondere Nickel als besonders geeignet erscheint.

Die Cluster 4, die das Clustermaterial bildet, sind von Graphenhüllen 5 aus einigen Graphenlagen, die gekrümmt um die Cluster 4 angeordnet sind, umgeben, wie es in Fig. 2 detaillierter dargestellt ist. Somit liegt ein Teil der Kohlenstoffmatrix als die einzelnen Cluster umgebenden Graphenebenen vor. Graphen ist eine Erscheinungsform von Kohlenstoff, bei der die Kohlenstoffatome wabenförmig gebunden sind, so dass flächige Strukturen gebildet werden. Eine Graphenhülle ist somit eine den Cluster 4 umgebende, eine Atomlage dicke Schicht von wabenförmig angeordneten Kohlenstoffatomen. Graphen leitet den elektrischen Strom gut entlang der flächigen Ausdehnung der Graphenschicht. Ein höherer elektrischer Widerstand tritt bei einer Stromleitung zwischen zwei benachbarten Graphenschichten auf. Die Graphenhüllen 5 können eine Bewegung der Cluster 4 in dem kohlenstoffhaltigen Material 3 verhindern und somit eine Perkolation der Cluster 4, die zur Ausbildung eines leitfähigen Pfades durch das kohlenstoffhaltige Material 3 führen kann, unterbinden. Mit anderen Worten bewirken die Graphenhüllen eine Abgrenzung von benachbarten Clustern 4, so dass eine Perkolation, d.h. die Ausbildung eines elektrisch leitenden Pfades durch ein Sich-Zusammenschließen von benachbarten Clustern 4 durch den Schichtwiderstand 1 verhindert wird.

Wird der Anteil des Clustermaterials zu hoch gewählt, können sich die Graphenhüllen zwischen den Clustern 4 nicht ungestört ausbilden, so dass Perkolation auftritt und sich leitfähige Pfade durch den Schichtwiderstand 1 ausbilden, wobei die Leitfähigkeit des Schichtwiderstands maßgeblich durch die Leitfähigkeit des Clustermaterials bestimmt wird. Der Anteil (Konzentration) des Clustermaterials, ab dem sich in dem Schichtmaterial leitfähige Pfade durch Zusammenschließen von benachbarten Clustern ausbilden können, wird Perkolationsschwelle genannt. Unterhalb der Perkolationsschwelle wird die Leitfähigkeit des Schichtwiderstands durch verschiedene Beiträge beeinflusst.

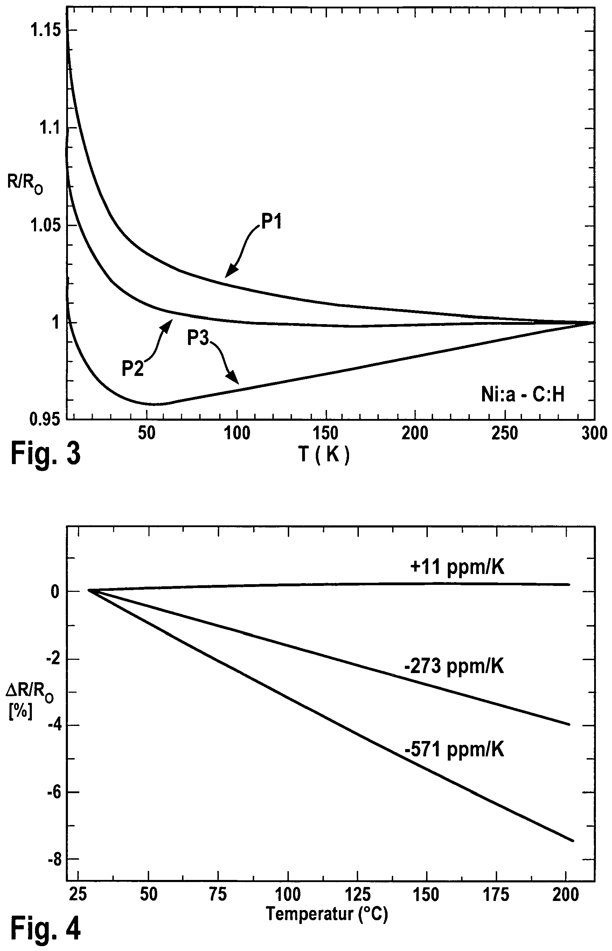

Wie in den Figuren 3 und 4 erkennbar ist, wird im Tieftemperaturbereich unterhalb von ca. 50K die Leitfähigkeit durch Tunnelprozesse zwischen den einzelnen Graphenebenen um die Cluster 4 bestimmt. Diese zeigen eine exponentielle Abhängigkeit von der Temperatur. Oberhalb dieser Temperatur tritt ein nicht bekannter Leitungsmechanismus auf, der keinem der bekannten Leitmechanismen in Dünnschichtsystemen oder deren Kombinationen entspricht. Dieser Mechanismus führt zu einer linearen Abhängigkeit des Widerstands von der Temperatur im Bereich von ca. 50K bis zu ca. 500K. In Fig. 3 sind die Abhängigkeiten der elektrischen Widerstände von der Temperatur im Bereich von 4K bis 300K von drei unterschiedlichen Proben dargestellt. Die Proben P1 weisen einen negativen Temperaturkoeffizienten von ca. -30 ppm/K, die Proben P2 einen Temperaturkoeffizienten von nahezu 0 und die Proben P3 besitzen einen positiven Temperaturkoeffizienten von ca. 80 ppm/K. Weitere Messungen haben ergeben, dass der Verlauf der Temperaturabhängigkeit des Widerstandes bis zu ca. 500K annähernd linear verläuft, wie es in Fig. 4 dargestellt ist.

Um den Schichtwiderstand 1 mit einem definierten Temperaturkoeffizienten zu versehen, ist als leitfähiges Clustermaterial ein Material mit einem positiven Temperaturkoeffizienten des elektrischen Widerstandes auszuwählen. Somit kann der stark negative Temperaturkoeffizient des Widerstands des kohlenstoffhaltigen Materials 3 durch den positiven Temperaturkoeffizienten des Widerstands des Clustermaterials kompensiert werden. Je nach verwendetem Clustermaterial bzw. bei einem Metall als Clustermaterial dem Schmelzpunkt des verwendeten Metalls, ergeben sich verschiedene Anteile der Konzentration des Clustermaterials in dem kohlenstoffhaltigen Material 3.

Bei Nickel als Clustermaterial liegt der Anteil bei ca. 50 at% Ni, um den Temperaturkoeffizienten des Widerstands auf etwa 0 zu kompensieren, vorausgesetzt die Cluster sind sphärisch und weisen eine Größe von 5 bis 50 nm, vorzugsweise zwischen 10 bis 20 nm auf.

Eine wichtige Voraussetzung für die lineare Temperaturabhängigkeit ist, dass bei Verwendung des Materials Nickel als Clustermaterial das Nickel in einer thermodynamisch stabilen Phase in den Clustern vorliegt. Je nach Herstellungsverfahren kann es vorkommen, dass Nickel mit Kohlenstoff die metastabile Phase Ni₃C oder Ni(hexagonal) ausbildet. Bei einer nachfolgenden Temperung an Luft wandelt sich diese Phase ab ca. 525K langsam und unkontrolliert in die thermodynamisch stabile kubische (fcc) Phase um, wodurch sich der Widerstand des so gebildeten Schichtwiderstandes dauerhaft ändert. Diese Umwandlung findet auch bereits bei niedrigeren Temperaturen über einen längeren Zeitraum statt.

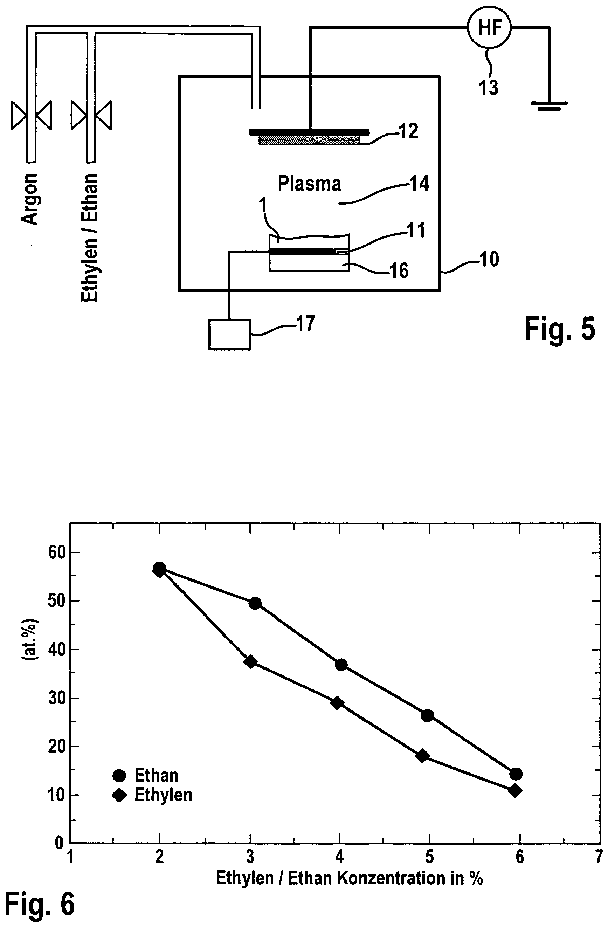

In Fig. 5 ist schematisch eine Vorrichtung zur Durchführung eines Verfahrens zur Herstellung des Schichtmaterials des Schichtwiderstands 1 dargestellt. Zur Herstellung der kohlenstoffhaltigen Schicht 3 wird in einem PVD-Prozess (Sputterprozess) in einer Vakuumkammer 10 das Sputtermaterial auf ein Trägersubstrat 11, vorzugsweise ein nichtleitendes keramisches Material, z.B. Al₂O₃, von einem Target 12 aus dem Clustermaterial gesputtert. Dies erfolgt durch reaktives HF-Sputtern, bei dem das Target 12 mit einer Hochfrequenzquelle 13 verbunden ist. Zwischen dem Trägersubstrat 11 und dem Target 12 bildet sich ein Plasma 14, durch das Atome des Targetmaterials in Richtung des Trägersubstrats 11 bewegt werden. Der Sputterprozess erfolgt in einer Schutzgasatmosphäre mit einem Inertgas, z.B. mit Argon, wobei weiterhin ein kohlenstoffhaltiges Reaktivgas, wie z.B. Ethylen oder Ethan in einer bestimmten Konzentration eingebracht wird, so dass bei Ausbilden des Plasmas 14 durch Dissoziierung Kohlenstoff oder Kohlenwasserstoff gebildet wird, das sich auf dem Trägersubstrat 11 gemeinsam mit dem Targetmaterial ablagert. Auf diese Weise wird erreicht, dass das Clustermaterial gleichmäßig verteilt in der Kohlenstoffschicht bzw. Kohlenwasserstoffschicht vorliegt.

Die Konzentration des Reaktivgases in dem Schutzgas bestimmt den prozentualen Anteil des Clustermaterials in dem kohlenstoffhaltigen Material 3. Dies ist in dem Diagramm der Fig. 6 dargestellt. Dort ist die Konzentration des Targetmaterials in der kohlenstoffhaltigen Schicht abhängig von der Konzentration des Reaktivgases während des Abscheideprozesses (kombinierter PVD/CVD-Prozess). Mit Hilfe dieses Diagramms kann während der Herstellung der Schicht der gewünschte Anteil des Targetmaterials durch Vorgeben der Konzentration des Reaktivgases eingestellt werden.

Bei der Herstellung eines Schichtwiderstandes mit einer linearen Temperaturabhängigkeit bis zu Temperaturen von 500 K ist darauf zu achten, dass sich bereits während der Herstellung des Schichtmaterials das Clustermaterial in einer thermodynamisch stabilen Phase ausbildet. D.h., bei der Verwendung von Nickel als Clustermaterial soll das Nickel in einer kubischen (fcc) Phase ausgebildet werden, die temperaturbeständig ist. In diesem Fall bewirken nachfolgende Temperaturbehandlungen keine Phasenänderungen mehr, so dass die Temperaturabhängigkeit des elektrischen Widerstandes konstant bleibt. Dazu ist vorgesehen, dass während des kombinierten Sputterprozesses, bei dem sowohl physikalisch das Clustermaterial als auch durch chemische Dissoziierung Kohlenstoff bzw. Kohlenwasserstoff auf das Trägersubstrat 11 aufgebracht wird, die abgeschiedene Schicht auf eine Prozesstemperatur zu erwärmen. Dazu wird das Trägersubstrat 11 mit Hilfe einer daran angeordneten Heizeinrichtung 16 z.B. bei Nickel als Clustermaterial auf eine Temperatur zwischen 200°C und 400°C, vorzugsweise zwischen 250°C und 350°C, aufgeheizt, während der Abscheideprozess (PVD-/CVD-Prozess) durchgeführt wird.

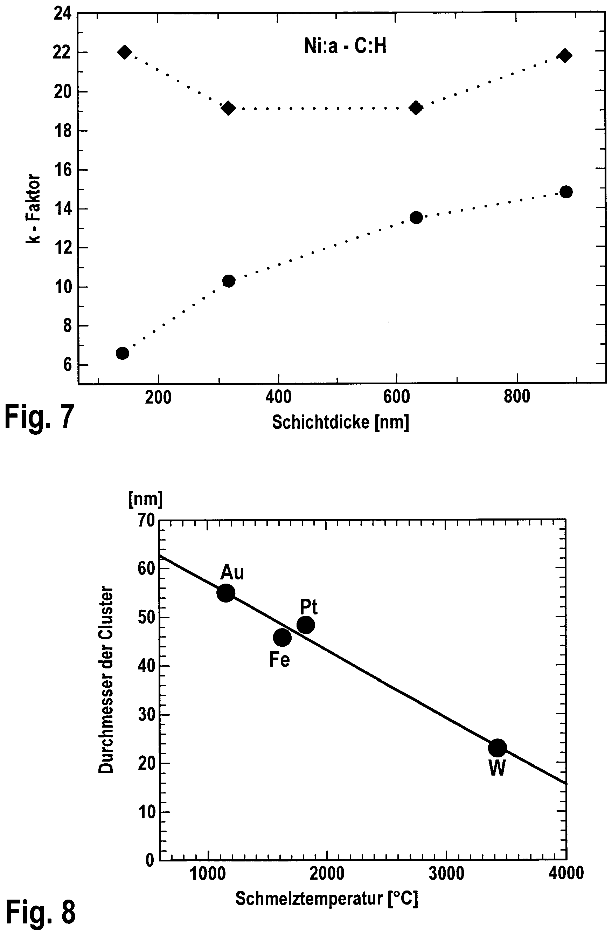

In Fig. 7 wird bei verschiedenen Dicken des Schichtmaterials und bei Nickel als Clustermaterial die Veränderung des k-Faktors bei den Temperaturen von 100°C und 300°C dargestellt. Man erkennt, dass bei einer Trägersubstrattemperatur von 300°C der k-Faktor für verschiedene Schichtdicken etwa konstant ist, während dies bei geringeren Temperaturen nicht der Fall ist.

Die Prozesstemperatur, bei der eine Umwandlung bereits während der Abscheidung der kohlenstoffhaltigen Schicht erfolgt, ist von dem eingelagerten Clustermaterial abhängig. Anstelle von Nickel als Clustermaterial können auch andere Materialien, vorzugsweise Metalle oder Metalllegierungen vorgesehen werden. Bei anderen Clustermaterialien können andere Prozesstemperaturen notwendig sein, die so gewählt sind, dass sich das Clustermaterial bei oder unmittelbar nach seinem Abscheiden in eine thermisch stabile oder thermodynamisch stabile Phase umwandelt.

Bei einer Verwendung von Kobalt als Sputtermatierial wurde festgestellt, dass sich Kobalt als Kobaltcarbid Co₂C in der kohlenstoffhaltigen Schicht einlagert. Kobaltcarbid Co₂C ist jedoch nicht temperaturstabil und wandelt sich bei Temperaturen zwischen 240 und 250°C in eine stabile Phase um. Beispielsweise reagiert Kobaltcarbid Co₂C im Beisein von Wasserstoff zu Kobalt und Methan CH₄, wonach das Kobalt in einer thermodynamisch stabilen orthorhombischen Phase vorliegt. Wird das Kobaltcarbid Co₂C bei anderen Temperaturen hergestellt, zerfällt es bei dieser Temperatur nicht vollständig, sondern erst oberhalb von 350°C bzw. dann bei 620°C zerfällt es vollständig.

Als weiteres Sputtermaterial kommt beispielsweise auch Eisen in Betracht. Dabei wird Eisencarbid in der kohlenstoffhaltigen Schicht eingelagert. Das Eisencarbid ist temperaturbeständiger. Erst bei der eutektischen Temperatur von 723°C kann aus Eisencarbid Perlit entstehen. Bei 1493°C erfolgt eine peritektische Umwandlung.

Zusätzlich kann auch ein Energieeintrag durch ein HF-Bias-Sputtern in Form einer zusätzlichen Substrat-Bias-Spannung bereitgestellt werden. Beim HF-Bias-Sputtern wird eine von einer Bias-Hochfrequenzquelle 17 bereitgestellte Hochfrequenzspannung an das Trägersubstrat 11 und an das Targetmaterial angelegt. So wird nicht nur Material vom Target 12 abgetragen, sondern gleichzeitig auch von dem Trägersubstrat 11 bzw. von der darauf aufgebrachten Schicht.

Neben der linearen Temperaturabhängigkeit weist der obige Schichtwiderstand eine hohe Dehnungsempfindlichkeit auf. Es werden üblicherweise k-Faktoren (Gauge factor, relative Widerstandsänderung bezüglich der Dehnung ε) k = ΔR/R / ε von 20 erreicht. Es wird vermutet, der hohe k-Faktor eine Wirkung der Graphenhüllen ist, die beim elektrischen Transport von Ladungsträgern als Hindernis dienen und von den Ladungsträgern daher überwunden werden müssen. Eine mechanische Dehnung, z.B. ein direkter Druck auf den Schichtwiderstand verändert u.a. den Abstand der Ebenen der Graphenhüllen, so dass sich der elektrische Widerstand recht stark beeinflussen lässt. Daraus könnten die große Widerstandsänderung bei einer Dehnung und damit der hohe k-Faktor resultieren.

Die Auswahl des Clustermaterials kann nach mehreren Gesichtspunkten erfolgen, um einen angepassten Temperaturkoeffizienten des Widerstands (von 0 oder positiv oder negativ) in Verbindung mit einem hohen k-Faktor zu erreichen.

Zum einen bestimmt die Größe der einzelnen Cluster die Perkolationsschwelle und den Abstand der einzelnen Cluster zueinander. Die Clustergröße ist vom Schmelzpunkt des Clustermaterials abhängig. Metall oder Metalllegierungen mit hohem Schmelzpunkt bilden kleinere Cluster als Metalle oder Metalllegierungen mit niedrigerem Schmelzpunkt. Dies ist in der Darstellung der Fig. 8 gezeigt, in der die Beziehung zwischen der Schmelztemperatur für die Metalle Au, Pt, Fe und W und der Clustergröße dargestellt ist. Befinden sich viele kleine Cluster mit geringem Abstand in dem kohlenstoffhaltigen Material, ist die Perkolationsschwelle niedriger als bei größeren Clustern. D.h., schon bei kleinen Metall- bzw. Metalllegierungskonzentrationen tritt eine Perkolation, d.h. die Ausbildung leitfähiger Pfade, in dem kohlenstoffhaltigen Material auf.

Die Konzentration des Clustermaterials in dem kohlenstoffhaltigen Material bestimmt jedoch, inwieweit der Temperaturkoeffizient des Schichtwiderstandes, d.h. des kohlenstoffhaltigen Schichtmaterials, hin zu einem positiven Temperaturkoeffizienten verschoben werden kann.

Bei Wolfram, das einen sehr hohen Schmelzpunkt (3410°C) hat, werden sehr kleine Cluster (im Bereich von 1 nm bis 3 nm) in dem kohlenstoffhaltigen Material gebildet. Dies führt dazu, dass die Perkolationsschwelle bei unter 20 at% Wolfram liegt. Allein zur Kompensation des negativen Temperaturkoeffizienten des kohlenstoffhaltigen Materials muss jedoch der Gehalt von Wolfram in dem Schichtmaterial bei einem Wert von ca. 23 at% Wolfram liegen. Es kann daher mit dem Clustermaterial Wolfram entweder ein hoher k-Faktor oder ein Temperaturkoeffizient des Widerstands von 0 bzw. ein positiver Temperaturkoeffizient des Widerstands erreicht werden. Die Kombination aus beiden Eigenschaften ist nicht möglich.

Dagegen weist Nickel einen relativ niedrigen Schmelzpunkt (1453°C) auf, so dass Cluster in der Größenordnung von einigen 10 nm gebildet werden. Nickel zeigt (bei sphärischen bzw. annähernd sphärischen Clustern) eine Perkolationsschwelle bei ca. 65 at% Nickel in dem kohlenstoffhaltigen Schichtmaterial. Um eine Kompensation des Temperaturkoeffizienten auf 0 zu erreichen, ist lediglich eine Konzentration des Clustermaterials von ca. 52 at% erforderlich. Somit ist bei Nickel die Kombination aus hoher Dehnungsempfindlichkeit und einem Temperaturkoeffizienten von 0 erreichbar.

Insgesamt sind Clustermaterialien mit einem Schmelzpunkt von unter 1800°C, vorzugsweise im Bereich von 1500°C oder darunter vorteilhaft, da diese bei obigem Herstellungsverfahren zu einer Clustergröße zwischen 5nm und 50nm führen, die die Kompensation des negativen Temperaturkoeffizienten des Widerstands in einem ausreichend großen Bereich ermöglichen. Zudem wird bei Clustern dieser Clustergrößen gewährleistet, dass bei oben beschriebenem Herstellungsprozess die Kondensation des Kohlenstoffs in graphitähnlichen Strukturen als Graphenhüllen um die Cluster erfolgt.

Bei der Auswahl von geeigneten Clustermaterialien kommen also für die Verwendung des Schichtwiderstandes als dehnungsempfindliches Material nur Materialien in Frage, bei denen die nötige Konzentration des Clustermaterials, die zu einem Temperaturkoeffizienten von 0 führt, kleiner ist als die Konzentration des Clustermaterials, die zur Perkolation führt (Perkolationsschwelle).

Günstigerweise sollte die Perkolationsschwelle so hoch wie möglich sein, so dass ein maximaler Spielraum zur Einstellung des Temperaturkoeffizienten des Widerstands besteht, z.B. für die Einstellung von definierten positiven Temperaturkoeffizienten. Beispielsweise sollte das Clustermaterial so ausgewählt werden, dass die Perkolationsschwelle 10% oder vorzugsweise 20% über der Konzentration des Clustermaterials, bei dem ein Temperaturkoeffizient des Widerstands von 0 erreicht wird.

Weiterhin ist bei der Auswahl eines geeigneten Clustermaterials darauf zu achten, dass dieses einen möglichst hohen positiven Temperaturkoeffizienten aufweist, damit die Kompensation des stark negativen Temperaturkoeffizienten des Schichtmaterials mit einem möglichst geringen Anteil von Clustermaterial in dem Schichtmaterial erreicht werden kann.

Weiterhin sollte je nach Einsatzgebiet des Schichtwiderstands das Clustermaterial möglichst stabil gegen Oxidation und andere chemische Reaktionen sein. Eine Oxidation hätte beispielsweise zur Folge, dass die elektrische Leitfähigkeit des gesamten Schichtwiderstands sich erheblich verändert.

Weiterhin ist darauf zu achten, dass das ausgewählte Clustermaterial eine geringe Diffusionsbeweglichkeit im Temperaturbereich aufweist, in dem der Schichtwiderstand eingesetzt werden soll. Insbesondere die Edelmetalle Gold und Silber kommen daher nicht in Frage, da deren Diffusionsbeweglichkeit in einer amorphen Kohlen(wasser)stoffmatrix zu hoch ist. Die hohe Diffusionsbeweglichkeit der Clustermaterialien Gold und Silber führt bereits unterhalb der Perkolationsschwelle zur Ausbildung leitfähiger Pfade, so dass der hohe k-Faktor des kohlenstoffhaltigen Materials nicht mehr zum Tragen kommt. Allgemein werden dann die Eigenschaften des Schichtwiderstands durch die Eigenschaften des Clustermaterials bestimmt.

Ein Schichtwiderstand mit einem Temperaturkoeffizienten von etwa 0 mit einem hohen k-Faktor, bei dem sowohl k-Faktor als auch Temperaturkoeffizient über einen großen Temperaturbereich konstant sind, eignet sich für Druckmessungen und Kraftmessungen in vielen Einsatzgebieten. Je nach Wahl des Clustermaterials können derartige Schichtwiderstände auch zur Druck- bzw. Kraftmessung in aggressiven Umgebungen, wie z.B. in Hydrauliken, eingesetzt werden.

Dazu ist es insbesondere möglich, den Schichtwiderstand 1 (z.B. wie er in Fig. 1 dargestellt ist) selbst, d.h. ohne eine druckaufnehmende Membran zur Detektion von Umgebungsdrücken zu verwenden. Der Schichtwiderstand 1 muss lediglich auf einem nichtleitenden Material aufgebracht und in die entsprechende Druckumgebung eingebracht werden. Die Widerstandsänderung repräsentiert dann eine Druckänderung, wenn der Temperaturkoeffizient in oben beschriebener Weise auf Null eingestellt ist.

## Patentansprüche

1. Schichtwiderstand (1) mit einem kohlenstoffhaltigen Material (3). in das Cluster (4) aus leitfähigem Clustermaterial eingebracht sind,
wobei das leitfähige Clustermaterial einen positiven Temperaturkoeffizienten aufweist, und wobei die Cluster (4) von einer Graphenhülle umgeben sind und in das kohlenstoffhaltige Material (3) eingebettet sind, wobei das Clustermaterial in einer thermodynamisch stabilen Phase vorliegt.

2. Schichtwiderstand (1) nach Anspruch 1, wobei der Anteil des Clustermaterials unterhalb der Perkolationsschwelle für das Clustermaterial gewählt ist, dass keine vollständige Perkolation der Cluster in dem kohlenstoffhaltigen Material auftritt.

3. Schichtwiderstand (1) nach Anspruch 1 oder 2,
wobei das kohlenstoffhaltige Material eine Matrix mit amorphem Kohlenstoff oder amorphem Kohlenwasserstoff aufweist.

4. Schichtwiderstand (1) nach einem der Ansprüche 1 bis 3, wobei das Clustermaterial Metall oder eine Metalllegierung, insbesondere Nickel, eine Nickellegierung, Kupfer, eine Kupferlegierung, Eisen oder eine Eisenlegierung, Kobalt oder eine Kobaltlegierung enthält.

5. Schichtwiderstand (1) nach einem der Ansprüche 1 bis 4, wobei der Anteil des Clustermaterials in der kohlenstoffhaltigen Schicht so eingestellt ist, dass der Temperaturkoeffizient des Schichtwiderstandes (1) Null ist.

6. Verfahren zum Auswählen eines leitfähigen Clustermaterials für Cluster (4) bei der Herstellung eines Schichtwiderstands (1) nach Anspruch 1 durch Ausbilden der Cluster (4) durch Abscheidung in einem PVD-Prozess in einer reaktiven Atmosphäre mit einem kohlenstoffhaltigen Gas,
wobei das Clustermaterial unter Vorgabe eines gewünschten Temperaturkoeffizienten des Widerstandes, insbesondere eines gewünschten Temperaturkoeffizienten des Widerstandes von gleich oder größer Null, unter Berücksichtigung des positiven Temperaturkoeffizienten des Widerstandes des Clustermaterials so ausgewählt wird, dass der Anteil des Clustermaterials, bei dem der gewünschte Temperaturkoeffizient erreicht wird, unterhalb der Perkolationsschwelle liegt.

7. Verfahren nach Anspruch 6, wobei als Clustermaterial ein Material ausgewählt wird, das chemisch inert gegen Luft. Wasser oder Öl ist.

8. Verfahren nach Anspruch 6 oder 7, wobei als Clustermaterial ein Material ausgewählt wird, bei dem im Wesentlichen keine Diffusionsbewegung der Cluster (4) und/oder des Clustermaterials in dem kohlenstoffhaltigen Material auftritt.

9. Verfahren zur Herstellung eines Schichtwiderstands (1) nach Anspruch 1, wobei ein PVD-Prozess mit einem leitfähigen Sputtermaterial auf ein Trägersubstrat (11) unter einer reaktiven Atmosphäre eines kohlenstoffhaltigen Gases durchgeführt wird, so dass das kohlenstoffhaltige Gas dissoziiert wird und eine kohlenstoffhaltige Schicht (3) auf dem Trägersubstrat (11) abgeschieden wird, in der Cluster (4) des Sputtermaterials eingebettet sind, wobei die kohlenstoffhaltige Schicht (3) während des Durchführens des PVD-Prozesses auf eine vorbestimmte Temperatur erhitzt wird, bei der sich das Sputtermaterial oder eine Verbindung des Sputtermaterials in einer thermodynamisch stabilen Phase ausbildet.

10. Verfahren nach Anspruch 9, wobei das Trägersubstrat während des PVD-Prozesses auf eine Temperatur unter 600°C, insbesondere auf eine Temperatur zwischen 150°C und 300°C aufgeheizt wird.

11. Verfahren nach Anspruch 9 oder 10, wobei das kohlenstoffhaltige Gas Ethan, Ethylen, Ethen oder Ethin aufweist.

12. Verfahren nach einem der Ansprüche 9 bis 11, wobei die Konzentration des kohlenstoffhaltigen Gases den Anteil des Sputtermaterials in der kohlenstoffhaltigen Schicht (3) bestimmt, wobei die Konzentration des kohlenstoffhaltigen Gases so eingestellt wird, dass die Cluster (4) des Sputtermaterials in der kohlenstoffhaltigen Schicht (3) von einander durch Graphenschichten getrennt sind.

13. Verfahren nach Anspruch 12, wobei der Anteil des Sputtermaterials so gewählt wird, dass sich ein vorgegebener Temperaturkoeffizient des Widerstands für den Schichtwiderstand (1) einstellt.

14. Verwendung des Schichtwiderstands nach Anspruch 4 oder 5 als Sensorschicht, wobei ein dehnungsempfindlicher Bereich durch den Schichtwiderstand (1) ausgebildet ist.

## Claims

1. A film resistor (1) comprising a material (3) that contains carbon, into which clusters (4) of conductive cluster material are introduced, the conductive cluster material having a positive temperature coefficient, and the clusters (4) being surrounded by a graphite shell and being embedded in the material (3) that contains carbon, the cluster material being in a thermodynamically stable phase.

2. The film resistor (2) according to Claim 1, the proportion of cluster material being chosen to be below the percolation threshold for the cluster material so that total percolation of the clusters in the material that contains carbon does not occur.

3. The film resistor (1) according to Claim 1 or 2, the material that contains carbon exhibiting a matrix with amorphous carbon or amorphous hydrocarbon.

4. The film resistor (1) according to any of Claims 1 to 3, the cluster material containing metal or a metal alloy, in particular nickel, a nickel alloy, copper, a copper alloy, iron or an iron alloy, cobalt or a cobalt alloy.

5. The film resistor (1) according to any of Claims 1 to 4, the proportion of cluster material in the film that contains carbon being set such that the temperature coefficient of the film resistor (1) is zero.

6. A method for selecting a conductive cluster material for clusters (4) during the production of a film resistor (1) according to Claim 1 by forming the clusters (4) by deposition in a PVD process in a reactive atmosphere using a gas that contains carbon, the cluster material being selected based on a predetermined desired temperature coefficient of the resistance, in particular a desired temperature coefficient of resistance equal to or greater than zero, taking into account the positive temperature coefficient of the resistance of the cluster material, so that the proportion of cluster material at which the desired temperature coefficient is achieved is below the percolation threshold.

7. The method according to Claim 6, the cluster material that is selected being a material that is chemically inert to air, water or oil.

8. The method according to Claim 6 or 7, the cluster material that is selected being a material with which there is essentially no diffusion motion of the clusters (4) and/or of the cluster material in the material that contains carbon.

9. A method for producing a film resistor (1) according to Claim 1, A PVD process being carried out with a conductive sputtering material on a carrier substrate (11) in a reactive atmosphere of a gas that contains carbon so that the gas that contains carbon is disassociated and a film (3) that contains carbon, and in which clusters (4) of the sputtering material are embedded, is deposited on the carrier substrate (11), while the PVD process is carried out the film (3) that contains carbon being heated to a predetermined temperature at which the sputtering material or a compound of the sputtering material is formed in a thermodynamically stable phase.

10. The method according to Claim 9, during the PVD process the carrier substrate being heated to a temperature of below 600°C, in particular to a temperature of between 150° and 300°C.

11. The method according to Claim 9 or 10, the gas that contains carbon comprising ethane, ethylene, ethane or ethyne.

12. The method according to any of Claims 9 to 11, the concentration of the gas that contains carbon determining the proportion of sputtering material in the film (3) that contains carbon, the concentration of the gas that contains carbon being set such that the clusters (4) of sputtering material in the film (3) that contains carbon are separated from one another by graphene films.

13. The method according to Claim 12, the proportion of sputtering material being chosen so that a predetermined temperature coefficient of resistance for the film resistor (1) is set.

14. The use of the film resistor according to Claim 4 or 5 as a sensor layer, a strain-sensitive area being formed by the film resistor (1).

## Revendications

1. Résistance (1) à couche, comprenant une matière (3) carbonée, dans laquelle sont introduits des agrégats (4) en une matière d'agrégat conductrice, la matière d'agrégat conductrice ayant un coefficient de température positif et les agrégats (4) étant entourés d'un enrobage de graphite et incorporés dans la matière (3) carbonée, dans laquelle la matière d'agrégat se présente sous une phase stable thermodynamiquement.

2. Résistance (1) à couche suivant la revendication 1, dans laquelle la proportion de la matière d'agrégat est choisie en dessous du seuil de percolation de la matière d'agrégat, de manière à ce qu'il ne se produise pas une percolation complète de l'agrégat dans la matière carbonée.

3. Résistance (1) à couche suivant la revendication 1 ou 2, dans laquelle la matière carbonée a une matrice ayant du carbone amorphe ou un hydrocarbure amorphe.

4. Résistance (1) à couche suivant l'une des revendications 1 à 3, dans laquelle la matière d'agrégat contient un métal ou un alliage métallique, notamment du nickel, un alliage de nickel, du cuivre, un alliage de cuivre, du fer ou un alliage de fer, du cobalt ou un alliage de cobalt.

5. Résistance (1) à couche suivant l'une des revendications 1 à 4, dans laquelle la proportion de la matière d'agrégat dans la couche carbonée est réglé de manière à ce que le coefficient de température de la résistance (1) à couche soit égal à zéro.

6. Procédé de sélection d'une matière d'agrégat conductrice pour des agrégats (4) dans la fabrication d'une résistance (1) à couche suivant la revendication 1, par constitution des agrégats (4) par dépôt dans un procédé PVD dans une atmosphère réactive ayant un gaz carboné, dans lequel on choisit la matière d'agrégat en prescrivant un coefficient de température souhaité de la résistance, notamment un coefficient de température souhaité de la résistance égal ou supérieur à zéro, en prenant en compte le coefficient de température positif de la résistance de la matière d'agrégat, de manière à ce que la proportion de la matière d'agrégat, pour laquelle le coefficient de température souhaité est atteint, soit inférieure au seuil de percolation.

7. Procédé suivant la revendication 6, dans lequel on choisit comme matière d'agrégat une matière inerte chimiquement vis-à-vis de l'air, de l'eau ou de l'huile.

8. Procédé suivant la revendication 6 ou 7, dans lequel on choisit comme matière d'agrégat une matière pour laquelle il ne se produit sensiblement pas de mouvement de diffusion des agrégats (4) et/ou de la matière d'agrégat dans la matière carbonée.

9. Procédé de fabrication d'une résistance (1) à couche suivant la revendication 1, dans lequel on effectue un processus PVD avec une matière conductrice de pulvérisation cathodique sur un substrat (11) support, sous une atmosphère réactive d'un gaz carboné, de manière à dissocier le gaz carboné et à déposer sur le substrat (11) support une couche (3) carbonée, dans laquelle des agrégats (4) de la matière de pulvérisation cathodique sont incorporés, la couche (3) carbonée étant chauffée pendant que l'on effectue le processus PVD jusqu'à une température définie à l'avance pour laquelle la matière de pulvérisation cathodique, ou un composé de la matière de pulvérisation cathodique, se forme sous une phase stable thermodynamiquement.

10. Procédé suivant la revendication 9, dans lequel on porte le substrat support, pendant le processus PVD, à une température inférieure à 600°C, notamment à une température comprise entre 150°C et 300°C.

11. Procédé suivant la revendication 9 ou 10, dans lequel le gaz carboné comporte de l'éthane, de l'éthylène, de l'éthène ou l'éthine.

12. Procédé suivant l'une des revendications 9 à 11, dans lequel la concentration du gaz carboné détermine la proportion de la matière de pulvérisation cathodique dans la couche (3) carbonée, la concentration du gaz carboné étant réglée de manière à séparer les uns des autres, par des couches de graphite, les agrégats (4) de la matière de pulvérisation cathodique dans la couche (3) carbonée.

13. Procédé suivant la revendication 12, dans lequel on choisit la proportion de la matière de pulvérisation cathodique de manière à établir un coefficient de température donné à l'avance de la résistance pour la résistance (1) à couche.

14. Utilisation de la résistance à couche suivant la -revendication 4 ou 5 comme couche de capteur, une plage sensible à la dilatation étant constituée par la résistance (1) à couche.
